# EUROPÄISCHE PATENTSCHRIFT

(11) **EP 3 088 492 B1**
(45) Veröffentlichungstag und Bekanntmachung des Hinweises auf die Patenterteilung: **07.02.2018**
(21) Anmeldenummer: 15166002.4
(22) Anmeldetag: 30.04.2015
(51) Int. Cl.: C10J 3/26, C10J 3/66, C10J 3/30, C10K 1/32, C10K 1/04, C10J 3/00, C10B 53/02, C01B 32/324, C10B 47/44, C10B 47/06

(54) **VERFAHREN UND VORRICHTUNG ZUM VERGASEN VON BIOMASSE**
METHOD AND DEVICE FOR THE GASIFICATION OF BIOMASS
PROCÉDÉ ET DISPOSITIF DE GAZÉIFICATION DE BIOMASSE

(43) Veröffentlichungstag der Anmeldung: 02.11.2016
(73) Patentinhaber: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Rüger, Barthelt & Abel

(56) Entgegenhaltungen:
- WO-A1-02/46331
- DE-A1- 19 846 805
- DE-A1-102008 036 502

## Beschreibung

Die Erfindung betrifft ein Verfahren sowie eine Vorrichtung zum Vergasen von Biomasse. Unter Biomasse ist jede kohlenstoffhaltige, biogene Masse, wie etwa Holzabfälle, Ernteabfälle, Grasschnitt, Gärreste, Klärschlamm oder dergleichen zu verstehen.

In der Praxis kommen vorrangig dezentrale, kleine Anlagen mit einem Durchsatz unter 200 kg Biomasse pro Stunde zum Einsatz, beispielsweise an Bauernhöfen oder im kommunalen Bereich, um den Transport für die Biomasse und die Reststoffe zu vermeiden und die Abwärme vor Ort nutzen zu können. Die Akzeptanz solcher Anlagen im Markt fehlt bis heute. Ein wesentlicher Grund hierfür ist der Teer, der bei der Pyrolyse und Vergasung von Biomasse entsteht. Der Teer muss bislang aufwendig entfernt werden und erfordert in der Regel einen hohen Wartungsaufwand für die Anlagen. Wenn das bei der Vergasung erzeugte Gas anschließend in einem Blockheizkraftwerk verwendet werden soll, ist es sogar notwendig, den Teer vollständig aus dem erzeugten Produktgas zu entfernen. Nicht nur die Wartung, sondern auch die Anschaffung solcher Anlagen ist bislang teuer.

Ein Verfahren und eine Vorrichtung zur Vergasung von Biomasse unter Verwendung eines Gleichstromvergasers ist aus DE 10 2008 043 131 A1 bekannt. Zur Vermeidung der Teerbeladung des Produktgases wird dort ein einstufiges Verfahren mit Hilfe des Gleichstromvergasers vorgeschlagen, wobei der Brennstoff entgegen der Schwerkraft dem Vergasungsraum zugeführt wird. In der Reduktionszone wird oberhalb der Oxidationszone eine stationäre Wirbelschicht ausgebildet. Dadurch soll die bei Festbettvergasern bekannte kritische Kanalbildung im Bereich der Reduktionszone vermieden und auf diese Weise die Teerbeladung des Produktgases reduziert werden. Allerdings erfordert die Erzeugung einer solchen Wirbelschicht das Beschränken der Vergasung auf bestimmte biogene Reststoffe bzw. Partikelgrößen, da ansonsten eine stabile Wirbelschicht nicht erreicht werden kann.

EP 1 436 364 B1 beschreibt eine Vorrichtung mit einer Reaktionskammer, bei der die Zufuhr der Biomasse seitlich erfolgt. In der Reaktionskammer können die Teer enthaltenden Gase am geschlossenen Deckel kondensieren. Dies ermöglicht entweder das Entfernen des kondensierten Teers aus der Reaktionskammer oder das Zurückführen des Teers in die Reaktionszonen innerhalb der Reaktionskammer. Dadurch soll der Gesamtwirkungsgrad erhöht werden. Eine ähnliche Einrichtung beschreibt auch EP 2 522 707 A2. Dort ist zusätzlich eine Nachbehandlungseinheit vorhanden, mit der der Reststoff möglichst vollständig mineralisiert und "weiße Asche" erzeugt werden soll.

Eine weitere Lösung zur Biomassevergasung ist in DE 20 2009 008 671 U1 beschrieben. Dort wird ein Gleichstromvergaser mit einer Pyrolysekammer und einem Vergaser vorgeschlagen. In der Oxidationszone des Vergasers wird das teerhaltige Pyrolysegas bei 1200°C verbrannt. Dementsprechend sind sehr hohe Temperaturen in der Oxidationszone erforderlich.

EP 2 636 720 A1 beschreibt ein Verfahren, bei dem ein Synthesegas durch eine Dampfreformierung aus Biomasse erzeugt wird. Dafür sind sehr große Heizflächen zur indirekten Beheizung erforderlich. In Vergaserrohren bzw. Vergaserspiralen soll durch bewegte Paddel eine Wirbelschicht erzeugt werden. Das Synthesegas wird anschließend in einem Kohlefilter im Gegenstromverfahren gereinigt und kühlt dabei auch ab.

DE 198 46 805 A1 beschreibt ein Verfahren und eine Vorrichtung zur Vergasung von Biomasse mit den Merkmalen des Oberbegriffs des Patentanspruches 1 bzw. des Patentanspruches 13. Die Biomasse wird einem Entgasungsofen zugeführt zur Erzeugung von Koks und Pyrolysegas. Der Koks wird zerkleinert und fällt auf einen Brennerrost in einen Brennraum eines Vergasungsreaktors und ein Teil der Koks von dort in ein Glutbett. Der sich im Entgasungsofen bildende Teer tropft auf den Gitterrost und verdampft bzw. verbrennt im Brennraum. Im Glutbett bildet sich Aktivkohle, die entnommen und einem Filter zugeführt wird. Das im Vergasungsreaktor entstehende Schwachgas wird in einem Wärmetauscher abgekühlt und anschließend durch den Filter mit der Aktivkohle geleitet.

Ausgehend von diesem Stand der Technik kann es als Aufgabe der vorliegenden Erfindung angesehen werden, ein Verfahren und eine Vorrichtung zur Vergasung von Biomasse zu schaffen, das unterschiedlichste biogene Reststoffe unabhängig von der Partikelgröße verarbeiten und ein teerarmes Produktgas wirtschaftlich erzeugen kann.

Diese Aufgabe wird durch ein Verfahren mit den Merkmalen des Patentanspruches 1 sowie eine Vorrichtung mit den Merkmalen des Patentanspruches 13 gelöst.

Bei dem erfindungsgemäßen Verfahren wird das Produktgas aus der Biomasse in drei Verfahrensstufen erzeugt. In einer ersten Verfahrensstufe wird die Biomasse in einer Oxidationszone durch Zufuhr von einem sauerstoffhaltigen Gas, insbesondere Luft, unterstöchiometrisch oxidiert. Dadurch entstehen ein Rohgas und ein koksartiger, kohlenstoffhaltiger Reststoff.

Das Rohgas und der kohlenstoffhaltige Reststoff aus dieser ersten Verfahrensstufe werden in einer zweiten Verfahrensstufe teilweise derart vergast, dass Aktivkohle entsteht. Dabei werden vorzugsweise bis zu maximal 75% und weiter vorzugsweise bis zu maximal 60 bis 65% des kohlehaltigen Reststoffes in der Vergasungszone vergast. Die Temperatur in der Vergasungszone kann bei einem Ausführungsbeispiel mindestens 800°C und maximal 1000°C betragen. In der Vergasungszone wird ein heißes Produktgas und Aktivkohle erzeugt. In der dritten Verfahrensstufe werden in einer Kühlzone das heiße Produktgas und die Aktivkohle abgekühlt. Dabei findet ein Adsorptionsprozess statt, bei dem sich der Teer aus dem heißen Produktgas an der Aktivkohle anlagert. Somit wird der Teer aus dem heißen Produktgas entfernt und das im Anschluss an die dritte Verfahrensstufe bereitgestellte Produktgas ist teerarm bzw. im Wesentlichen frei von Teerbestandteilen.

In der Kühlzone wird das Produktgas abgekühlt, vorzugsweise auf eine Temperatur von höchstens 50 Grad Celsius.

Mit Hilfe dieses Verfahrens bzw. einer entsprechenden Vorrichtung, die die Verfahrensstufen bereitstellt, kann wirtschaftlich und einfach ein teerarmes Produktgas bei der Biomassevergasung erzeugt werden.

Bei einigen Ausführungsbeispielen beträgt der Heizwert des Produktgases zwischen 1,5 und 2 kWh/m³. Der Kaltgaswirkungsgrad des Verfahrens kann mehr als 70 Prozent betragen.

Mit diesem Verfahren können alle Arten und Größen von biogenen Reststoffen als Biomasse vergast werden. Die Ausbildung einer Wirbelschicht entfällt. Es entsteht kein belastetes Abwasser. Die Teerentfernung aus dem Produktgas ist auch bei kleinen Anlagen wirtschaftlich möglich, da weder hohe Investitionskosten in die Teerentfernung erforderlich sind und auch der Betrieb keinen hohen Wartungsaufwand mit sich bringt.

Das erfindungsgemäße Verfahren arbeitet mit einer Mischform aus autothermer und allothermer Vergasung. Die Temperatur in der Oxidationszone wird bei einem Ausführungsbeispiel durch die Menge des zugeführten sauerstoffhaltigen Gases eingestellt. Dadurch lässt sich die Gasproduktion an den Bedarf anpassen, ohne die Temperatur in der Vergasungszone zu beeinflussen. Die Temperatur in der Vergasungszone wird durch indirektes Beheizen mit einer Heizeinrichtung eingestellt.

Es ist bevorzugt, wenn die Temperatur in der Oxidationszone kleiner ist als der Ascheerweichungspunkt oder der Ascheschmelzpunkt der Asche des kohlenstoffhaltigen Reststoffes. Dabei ist es vorteilhaft, wenn die Temperatur in der Oxidationszone möglichst nahe an dem Ascheerweichungspunkt bzw. dem Ascheschmelzpunkt liegt.

Für das indirekte Heizen der Vergasungszone werden bei einem Ausführungsbeispiel weniger als 10% des Energiegehaltes der zugeführten Biomasse benötigt. Gegenüber einer rein allothermen Vergasung können daher kleiner Heizflächen in der Vergasungszone eingesetzt werden.

Die Aktivkohle und das heiße Produktgas werden in der Kühlzone durch indirektes Kühlen abgekühlt. Das abgekühlte Produktgas, das auch als Reingas bezeichnet werden kann, kann im Anschluss an die Kühlzone einer Filter- und/oder Staubabscheideeinheit zugeführt werden, um die Staubbeladung des Produktgases zu verringern.

Die Oxidationszone und die Vergasungszone können bei einem Ausführungsbeispiel in einer gemeinsamen Reaktionskammer angeordnet sein, insbesondere bei einer vertikal ausgerichteten Reaktionskammer. Die Vergasungszone und die Kühlzone können entweder in separaten Reaktionskammern oder in einer gemeinsamen Reaktionskammer angeordnet sein.

Die wenigstens eine Reaktionskammer kann vertikal angeordnet sein. Dadurch lässt sich ein vereinfachter Transport ohne aufwändige Fördereinrichtungen erreichen. Alternativ dazu kann die wenigstens eine Reaktionskammer horizontal oder schräg zur Vertikalen und Horizontalen geneigt ausgerichtet sein.

Die Vergasungszone wird bei einem bevorzugten Ausführungsbeispiel durch die Wärme eines Brenners beheizt. Dies kann insbesondere durch das indirekte Beheizen einer die Vergasungszone aufweisenden Reaktionskammer bzw. des Reaktionskammerabschnitts erfolgen, in dem die Vergasungszone vorhanden ist. Als Brennstoff für den Brenner kann bei einem Ausführungsbeispiel die nach dem Abkühlen aus der Kühlzone entnommene Aktivkohle verwendet werden. Dabei kann es vorteilhaft sein, die Oberfläche der Aktivkohle vor dem Zuführen zu dem Brenner zu vergrößern, beispielsweise indem die Aktivkohle nach der Entnahme aus der Kühlzone gemahlen bzw. feingemahlen wird. Durch eine oder mehrere der genannten Maßnahmen kann die Effizienz des Verfahrens bzw. der Vorrichtung weiter erhöht werden.

Es ist weiter vorteilhaft, ein bei der Verbrennung in dem Brenner entstehendes Abgas zur Vorwärmung des sauerstoffhaltigen Gases vor dessen Zufuhr in die Oxidationszone zu verwenden. Zusätzlich oder alternativ kann das Abgas auch zur Trocknung der der Oxidationszone zugeführten Biomasse verwendet werden.

Bei einer vorteilhaften Ausführung kann eine Teilmenge der Aktivkohle nach der Vergasungszone und vor dem Zuführen zu der Kühlzone entnommen und zur Feinreinigung des in der Kühlzone abgekühlten Produktgases verwendet werden. Hierfür kann eine Reinigungseinrichtung mit Wechselbehältern für die Aktivkohle verwendet werden, wie sie an sich bekannt ist.

Es ist außerdem von Vorteil, wenn die Vergasung unter einem gegenüber dem Umgebungsdruck erhöhten Druck ausgeführt wird, beispielsweise bei einem Druck im Bereich von etwa 5 bar. Das erzeugte abgekühlte Produktgas kann dann ohne Zwischenverdichtung in Gasturbinen oder druckaufgeladenen Motoren verwendet werden. Um dies zu erreichen kann die wenigstens eine Reaktionskammer unter einen entsprechenden Druck gesetzt werden. Beispielsweise kann das sauerstoffhaltige Gas (z.B. Luft) über einen Kompressor oder eine andere geeignete Verdichtungseinheit unter Druck in die wenigstens eine Reaktionskammer eingeleitet werden.

Die erfindungsgemäße Vorrichtung zum Vergasen der Biomasse weist wenigstens eine Reaktionskammer bzw. wenigstens einen Reaktionsbehälter für die Oxidationszone, die Vergasungszone und die Kühlzone auf. Der Oxidationszone wird die Biomasse über eine Zufuhreinrichtung zugeführt. Mit Hilfe einer Gaszufuhreinrichtung wird das sauerstoffhaltige Gas in die Oxidationszone eingeleitet. Über die Menge des zugeführten sauerstoffhaltigen Gases und der zugeführten Biomasse lässt sich die Produktion des Produktgases an den Bedarf anpassen. Die Temperatur in der Vergasungszone wird unabhängig davon durch eine Heizeinrichtung, insbesondere eine indirekte Heizeinrichtung eingestellt. Eine Kühleinrichtung kühlt das heiße Produktgas und die Aktivkohle aus der Vergasungszone in einer Kühlzone.

Bei einem Ausführungsbeispiel hat die Vorrichtung eine einzige gemeinsame Reaktionskammer. Die Förderung des Rohgases und des kohlenstoffhaltigen Reststoffes von der Oxidationszone in die Vergasungszone findet zumindest unterstützt durch die Gewichtskraft im Wesentlichen in vertikaler Richtung statt. Gleichermaßen kann das heiße Produktgas und die Aktivkohle von der Vergasungszone in die Kühlzone, zumindest unterstützt durch die Gewichtskraft, erfolgen.

Alternativ hierzu ist es auch möglich, die Oxidationszone und die Vergasungszone in einer ersten Reaktionskammer und die Kühlzone in einer zweiten Reaktionskammer anzuordnen. Zur Förderung der Stoffe zwischen den Reaktionskammern und/oder innerhalb der Reaktionskammern können entsprechende Fördermittel, wie etwa Förderschnecken oder dergleichen vorhanden sein.

Vorteilhafte Ausgestaltungen des Verfahrens bzw. der Vorrichtung ergeben sich aus den abhängigen Patentansprüchen, der Beschreibung und der Zeichnungen. Nachfolgend werden bevorzugte Ausführungsbeispiele der Erfindung anhand der beigefügten Zeichnungen im Einzelnen erläutert. Es zeigen:
Fig. 1 ein Blockschaltbild eines Ausführungsbeispiels des erfindungsgemäßen Verfahrens bzw. der erfindungsgemäßen Vorrichtung,
Fig. 2 ein Ausführungsbeispiel der Vorrichtung mit einer gemeinsamen Reaktionskammer für eine Oxidationszone eine Vergasungszone und eine Kühlzone und
Fig. 3 eine schematische Darstellung eines weiteren Ausführungsbeispiels der Vorrichtung, wobei eine Oxidationszone und eine Vergasungszone einerseits und die Kühlzone andererseite in getrennten Reaktionskammern vorhanden sind.

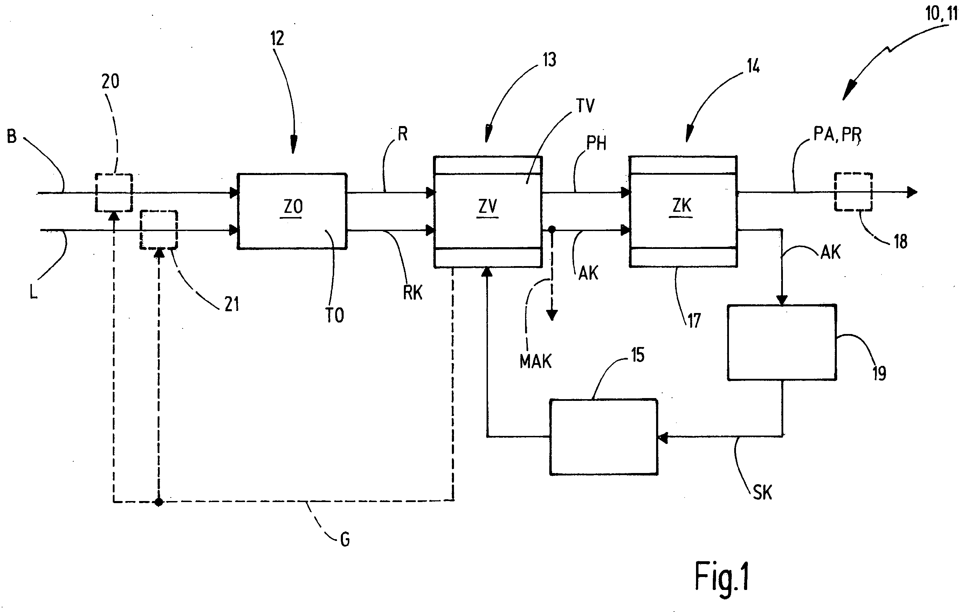

In der Fig. 1 ist schematisch ein Blockschaltbild eines Ausführungsbeispiels der Erfindung veranschaulicht. Das Blockschaltbild zeigt ein Verfahren 10 bzw. eine Vorrichtung 11 zum Vergasen einer Biomasse B. Das Verfahren weist im Wesentlich drei aufeinanderfolgende Verfahrensstufen 12, 13, 14 auf. In einer ersten Verfahrensstufe 12 wird die Biomasse B gemeinsam mit einem sauerstoffhaltigen Gas einer Oxidationszone ZO zugeführt. Als sauerstoffhaltiges Gas wird beim Ausführungsbeispiel Luft L verwendet. Die Menge an zugeführter Luft L wird abhängig vom Bedarf an einem zu erzeugenden Produktgas eingestellt. Außerdem kann über die Menge an Luft L eine Temperatur TO in der Oxidationszone ZO eingestellt werden.

In dieser ersten Verfahrensstufe oxidiert die Biomasse B in der Oxidationszone ZO unterstöchiometrisch. Dabei entsteht ein Rohgas R und ein kohlenstoffhaltiger Reststoff RK. Die Temperatur TO in der Oxidationszone wird unterhalb, aber möglichst nahe am Ascheschmelzpunkt oder am Ascheerweichungspunkt der Asche des kohlenstoffhaltigen Reststoffes RK eingestellt. Dadurch wird vermieden, dass die Asche des kohlenstoffhaltigen Reststoffes in der Oxidationszone ZO schmilzt bzw. erweicht und es zu Verklebungen im Bereich der Oxidationszone ZO kommt. Andererseits wird durch eine sehr hohe Temperatur TO in der Oxidationszone ZO bereits eine Reduzierung des Teergehalts in dem Rohgas R erreicht.

Das Rohgas R und der kohlenstoffhaltige Reststoff RK werden anschließend in einer zweiten Verfahrensstufe 13 in einer Vergasungszone ZV teilweise vergast. Die Vergasungszone ZV wird mit Hilfe einer Heizeinrichtung 15 indirekt beheizt. Die Heizeinrichtung 15 kann bei bevorzugten Ausführungsbeispielen wenigstens einen Brenner 16 aufweisen.

Die Temperatur TV in der Vergasungszone ZV kann über die Heizeinrichtung 15 unabhängig von der Temperatur in der Oxidationszone ZO eingestellt werden. Die Temperatur TV in der Vergasungszone ZV beträgt beim Ausführungsbeispiel mindestens 800°C und maximal 1000°C. Der kohlenstoffhaltige Reststoff RK wird in der Vergasungszone ZV mit Gasbestandteilen des Rohgases R teilweise vergast, wobei beim Ausführungsbeispiel bis zu etwa 60% des kohlenstoffhaltigen Reststoffes RK vergast werden. Die Gasbestandteile, die zu der Vergasung des kohlenstoffhaltigen Reststoffes RK verwendet werden, sind hauptsächlich Wasserdampf und Kohlendioxid.

Unter diesen Bedingungen entsteht in der Vergasungszone ZV ein heißes Produktgas PH, das noch einen unerwünscht hohen Teeranteil aufweist, sowie Aktivkohle AK. Das heiße Produktgas PH und die Aktivkohle AK werden einer Kühlzone ZK zugeführt.

In einer dritten Verfahrensstufe 14 wird das heiße Produktgas PH und die Aktivkohle AK mit Hilfe einer Kühleinrichtung 17 indirektabgekühlt. Die Temperatur des heißen Produktgases PH wird innerhalb der Kühlzone ZK auf eine Temperatur von zum Beispiel unter 50°C reduziert. Dabei findet in der Kühlzone ZK ein Adsorptionsprozess statt, bei dem sich der Teer aus dem Produktgas mit der Aktivkohle AK bindet. Die Aktivkohle AK wird durch den Teer aus dem Produktgas angereichert. Dadurch entsteht am Ende der Kühlzone ZK ein abgekühltes Produktgas PA, das auch als Reingas PR bezeichnet werden kann. Das Reingas PR ist vollständig teerfrei oder enthält lediglich noch einen vernachlässigbaren Teeranteil. Es kann zur Energiegewinnung verwendet werden und bedarf insbesondere keiner weiteren aufwendigen Nachbehandlung zur Teerentfernung. Insbesondere kann das Reingas PR unmittelbar in Blockheizkraftwerken eingesetzt werden.

Vor dem Zuführen der Aktivkohle AK zu der Kühlzone ZK, kann eine Teilmenge MAK der Aktivkohle AK abgezweigt bzw. entnommen werden, was in Fig. 1 durch einen gestrichelten Pfeil veranschaulicht ist. Diese Teilmenge MAK kann zur weiteren Feinreinigung des Reingases PR einer Reinigungsbehälteranordnung zugeführt werden, um den Restteergehalt weiter zu reduzieren. Solche Reinigungsbehälteranordnungen zur Gasreinigung sind an sich bekannt, so dass auf eine detaillierte Beschreibung verzichtet werden kann. Die entnommene Teilmenge MAK der Aktivkohle AK kann beispielsweise etwa 10% der Gesamtmenge der Aktivkohle betragen.

Wie in Fig. 1 gestrichelt veranschaulicht, kann das abgekühlte Produktgas PA bzw. das Reingas PR in einer geeigneten Staubabscheideeinheit 18 von Staub befreit werden, beispielsweise durch Filter, elektrostatische Einrichtungen, Zyklone oder dergleichen.

Die Aktivkohle AK kann aus der Kühlzone ZK entnommen und mit Hilfe einer Mahleinrichtung 19 gemahlen bzw. feingemahlen werden. Die gemahlene Aktivkohle, die nachfolgend als Kohlestaub SK bezeichnet wird, kann als Energieträger für eine Verbrennung eingesetzt werden. Beispielsweise kann der Kohlestaub SK oder zumindest ein Teil davon dem Brenner 16 der Heizeinrichtung 15 zur indirekten Beheizung der Vergasungszone ZV zugeführt werden.

In Fig. 1 sind außerdem zwei Möglichkeiten zur Verwendung eines Abgases G des wenigstens einen Brenners 16 der Heizeinrichtung 15 veranschaulicht. Das Abgas G kann zu Einen in einer Trocknungseinrichtung 20 zur Trocknung der Biomasse B vor dem Zuführen in die Oxidationszone ZO verwendet werden. Alternativ oder zusätzlich kann das Abgas G in einer Vorwärmeinrichtung 21 zum Vorwärmen der Luft L bzw. des sauerstoffhaltigen Gases vor dem Zuführen zur Oxidationszone ZO eingesetzt werden.

Das Verfahren ist eine Mischform aus einer autothermen und allothermen Vergasung. Für die indirekte Beheizung der Vergasungszone ZV in der zweiten Verfahrensstufe 13 werden beispielsgemäß höchstens 10% des Energiegehalts der Biomasse benötigt. Das Reingas PR hat einen Heizwert zwischen 1,5 und 2 kWh/m³. Es lassen sich Kaltwirkungsgrade mit über 70% erreichen. Das Entnehmen des Teers aus dem Produktgas durch die Adsorption in der dritten Verfahrensstufe 14 ist äußerst wirtschaftlich und erfordert weder hohe Investitionskosten, noch einen hohen Wartungsaufwand.

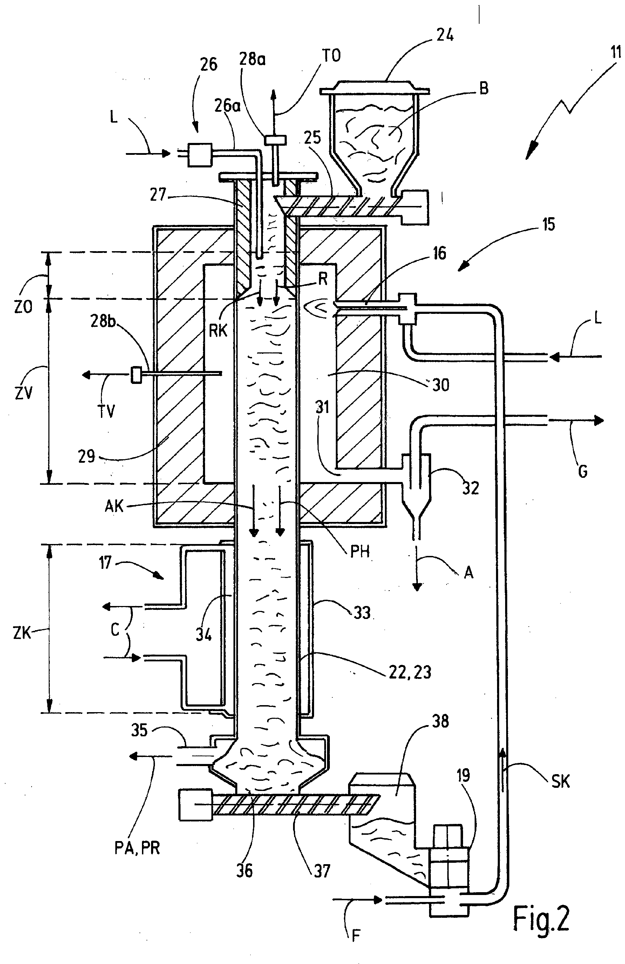

In Fig. 2 ist schematisch in einer teilgeschnittenen Seitenansicht ein Ausführungsbeispiel einer Vorrichtung 11 zur Vergasung von Biomasse B veranschaulicht. Die Vorrichtung 11 weist einen im Wesentlichen vertikal angeordneten zylindrischen Reaktionsbehälter 22 auf, der eine gemeinsame Reaktionskammer 23 begrenzt. In einem Abschnitt der Reaktionskammer 23 bzw. des Reaktionsbehälters 22 ist die Oxidationszone ZO und in einem sich daran anschließenden Abschnitt die Vergasungszone ZV gebildet. Ein weiterer Abschnitt der Reaktionskammer 23 bzw. des Reaktionsbehälters 22 bildet die Kühlzone ZK.

Am vertikal oberen Ende wird in den Reaktionsbehälter 22 die Biomasse B aus einem Silo 24 oder einem Zwischenspeicher unter Verwendung einer Zufuhreinrichtung 25 zugeführt. Als Zufuhreinrichtung 25 dient beispielsgemäß eine motorgetriebene Förderschnecke. An dem vertikal oberen Abschnitt des Reaktionsbehälters 22 ist außerdem eine Gaszufuhreinrichtung 26 zum Zuführen des sauerstoffhaltigen Gases bzw. der Luft L in die Oxidationszone ZO vorhanden. Die Luft L wird beispielsweise mittels einer Leitung 26a der Gaszufuhreinrichtung 26 direkt in die Oxidationszone ZO geleitet.

Die Oxidationszone ZO ist bei dem in Fig. 2 dargestellten Ausführungsbeispiel der Vorrichtung 11 durch einen Vertikalabschnitt des Reaktionsbehälters 22 gebildet. In diesem Vertikalabschnitt ist der Reaktionsbehälter 22 beim Ausführungsbeispiel mit einer thermischen Isolation 27 an der Wand des Reaktionsbehälters 22 ausgestattet. Die Temperatur TO in der Oxidationszone ZO soll zwar einerseits so hoch wie möglich sein, um den Teergehalt des Rohgases R zu reduzieren, andererseits jedoch unterhalb des Ascheschmelzpunktes der Asche des kohlenstoffhaltigen Reststoffes RK liegen, um Verklebungen zu vermeiden. Die Temperatur TO in der Oxidationszone ZO wird über einen ersten Temperatursensor 28a erfasst und an eine nicht näher dargestellte Prozesssteuereinrichtung übermittelt.

Die Vergasungszone ZV ist bei dem in Fig. 2 dargestellten Ausführungsbeispiel unmittelbar im Anschluss an die Oxidationszone ZO durch einen weiteren Vertikalabschnitt der Reaktionskammer 23 bzw. des Reaktionsbehälters 22 gebildet. Beim Ausführungsbeispiel ist die Vergasungszone ZV von einem Isolationsmantel 29 umschlossen. Der Isolationsmantel 29 kann auch zumindest einen Teil der Oxidationszone ZO umschließen. Zwischen dem Isolationsmantel 29 und der Außenwand des Reaktionsbehälters 22 ist eine Heizammer 30 gebildet. Die Heizkammer 30 ist beim Ausführungsbeispiel mit Abgas gefüllt, das durch den Brenner 16 der Heizeinrichtung 15 aufgeheizt wird. Ein zweiter Temperatursensor 28b erfasst die Temperatur in der Heizkammer 30, die wiederum charakteristisch ist für die Temperatur TV in der Vergasungszone ZV.

Die Vorrichtung 11 kann auch in einen Ruhezustand gebracht werden, in dem keine Biomasse zugeführt und kein Produktgas erzeugt wird. Die Wärme des Brenners 16 erwärmt sowohl die Vergasungszone ZV, als auch die Oxidationszone ZO. Durch die Isolation 27 kann die Temperatur in der Oxidationszone ZO auch sehr geringen Brennerleitungen des Brenners 16 während des Ruhezustands aufrechterhalten werden. Somit ist ein schneller Wiederanlauf aus dem Ruhezustand möglich.

Aus der Heizkammer 30 führt ein Austrittskanal 31 heraus und mündet in einen Ascheabscheider 32. Dort wird die Asche A aus der Verbrennung von dem Abgas G der Verbrennung getrennt und separat abgeleitet. Wie erläutert, kann das Abgas G beispielsweise zur Trocknung der Biomasse B und/oder zur Vorwärmung der Luft L verwendet werden.

Ein vertikal unterhalb der Vergasungszone ZV angeordneter Abschnitt des Reaktionsbehälters 22 ist mit der Kühleinrichtung 17 ausgestattet. Die Kühleinrichtung 17 dient zur indirekten Kühlung der innerhalb des Reaktionsbehälters 22 vorhandenen Kühlzone ZK. Hierfür ist die Außenwand des Reaktionsbehälters 22 mit einem Kühlmantel 33 umschlossen, so dass zwischen dem Reaktionsbehälter 22 und dem Kühlmantel 33 ein Kühlraum 34 gebildet ist. Durch den Kühlraum 34 fließt ein Kühlmittel C, zum Beispiel Wasser und/oder Luft, wodurch der Abschnitt des Reaktionsbehälters 22, der innerhalb des Kühlmantels 33 liegt und die Kühlzone ZK bildet, indirekt gekühlt wird.

Vertikal unterhalb der Kühlzone ZK befindet sich ein Produktgasauslass 35, der beim Ausführungsbeispiel seitlich und im Wesentlichen radial zur Achse des Reaktionsbehälters 22 verläuft. Außerdem ist an dem unteren Endbereich des Reaktionsbehälters 22 ein Feststoffauslass 36 vorhanden, der zu einer Entnahmeeinrichtung 37 - beim Ausführungsbeispiel eine motorgetriebene Förderschnecke - führt. Die mit Teer angereicherte, abgekühlte Aktivkohle wird über die Entnahmeeinrichtung 37 aus dem Reaktionsbehälter 22 entnommen und beispielsgemäß über einen Zwischenspeicher 38 der Mahleinrichtung 19 zugeführt. Die Mahleinrichtung 19 mahlt die Aktivkohle zu Kohlestaub SK. Dieser wird beispielsgemäß mit Hilfe eines Förderfluides F dem Brenner 16 der Heizeinrichtung 15 als Brennstoff zugeführt. Als Förderfluid kann Luft oder ein Inertgas, beispielsweise das Abgas G, oder ein Gemisch daraus verwendet werden. Zusätzlich zu dem Kohlestaub SK hat der Brenner 16 einen Anschluss zum Zuführen von Luft L oder einem anderen sauerstoffhaltigen Gas.

Durch die vertikale Anordnung des Reaktionsbehälters 22 erfolgt der Feststofftransport zwischen den Zonen ZO, ZV, ZK durch die Gewichtskraft des Materials. So wird der kohlenstoffhaltige Reststoff RK aus der Oxidationszone ZO durch seine Gewichtskraft in die Vergasungszone ZV gefördert. Entsprechend bewegt sich die Aktivkohle AK aus der Vergasungszone ZV durch ihre Gewichtskraft in die Kühlzone ZK. Die Verweildauer der Feststoffe in den unterschiedlichen Zonen kann insbesondere durch die Fördermenge der Entnahmeeinrichtung 37 eingestellt werden, die die angereicherte Aktivkohle AK aus der Kühlzone ZK bzw. aus einem sich daran anschließenden Abschnitt des Reaktionsbehälters 22 abführt. Der Gastransport wird zum einen dadurch erreicht, dass am vertikal oberen Ende Luft L zugeführt wird und somit in der Reaktionskammer 23 vorhandene Gase vertikal nach unten drückt. Zusätzlich oder alternativ kann am Produktgasauslass 35 eine Absaugeinrichtung angeschlossen sein, um den Gastransport innerhalb der Reaktionskammer 23 herbeizuführen oder zu unterstützen.

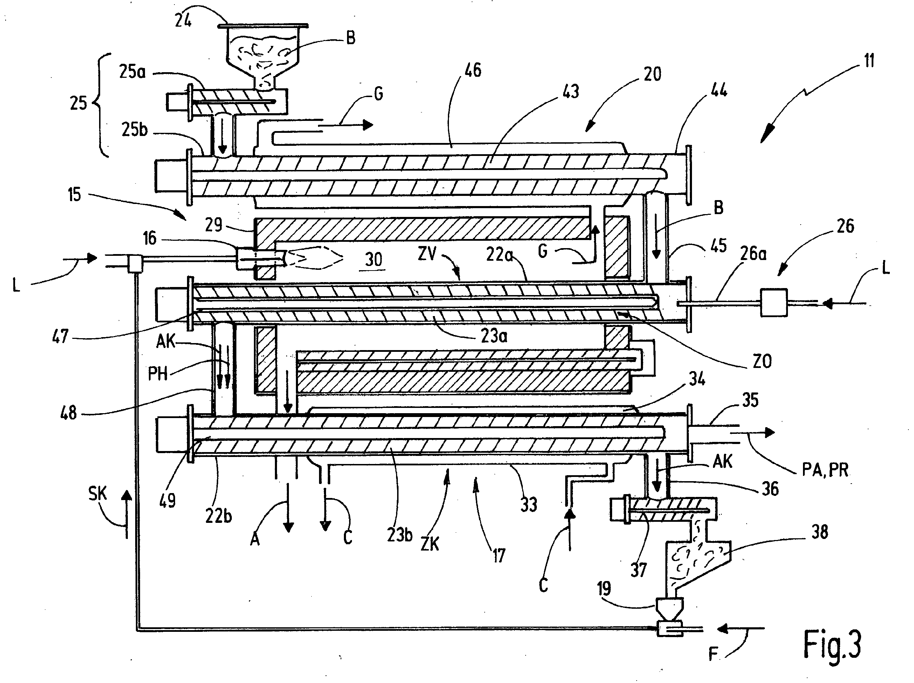

Ein weiteres Ausführungsbeispiel der Vorrichtung 11 ist in Fig. 3 veranschaulicht. Der wesentliche Unterschied zum Ausführungsbeispiel nach Fig. 2 ist darin zu sehen, dass die Kühlzone ZK in einer separaten Reaktionskammer getrennt von der die Oxidationszone ZO und die Vergasungszone ZV aufweisenden Reaktionskammer angeordnet ist. Außerdem sind die Reaktionskammern bei dem in Fig. 3 veranschaulichten Ausführungsbeispiel im Wesentlichen horizontal ausgerichtet.

In Fig. 3 ist außerdem beispielhaft ein Ausführungsbeispiel einer Trocknungseinrichtung 20 veranschaulicht. Die Biomasse B wird aus dem Silo 24 über eine erste Stufe 25a der Zufuhreinrichtung 25 in eine Trocknungskammer 43 gefördert. In der Trocknungskammer 43 wird die Biomasse B durch eine zweite Stufe 25b der Zufuhreinrichtung 25 weiter transportiert. Die Trocknungskammer 43 ist in einem zylindrischen, horizontal angeordneten Trocknungsbehälter 44 angeordnet. Das in Transportrichtung der Biomasse B angeordnete Ende des Trocknungsbehälters 44 bzw. der Trocknungskammer 43 ist über einen im Wesentlichen vertikalen Verbindungskanal 45 mit einem ersten Reaktionsbehälter 22a verbunden, in dem eine erste Reaktionskammer 23a gebildet ist. Der erste Reaktionsbehälter 22a beinhaltet die Oxidationszone ZO sowie die Vergasungszone ZV. Die Oxidationszone ZO befindet sich in einem Axialabschnitt des ersten Reaktionsbehälters 22a, in den die getrocknete Biomasse B zugeführt wird, also beispielsgemäß in dem Axialabschnitt, in den der erste Verbindungskanal 45 einmündet. Im Anschluss an die Oxidationszone ZO ist der erste Reaktionsbehälter 22a von dem Isolationsmantel 29 der Heizeinrichtung 15 umschlossen, wodurch die Heizkammer 30 gebildet ist, in der der wenigstens eine Brenner 16 der Heizeinrichtung 15 ein heißes Gas erzeugt, um der Vergasungszone ZV Wärme zuzuführen. Ein Abgaskanal führt im vertikal oberen Bereich aus der Kammer 30 heraus, um Abgas G in eine Ringkammer 46 um den Trocknungsbehälter 44 herum einzuleiten und dort Wärme zur Trocknung der Biomasse B indirekt auf die Biomasse B zu übertragen.

An einem vertikal unteren Bereich wird die Asche A der Verbrennung aus der Kammer 30 abgeführt.

Im Bereich des ersten Verbindungskanals 45 und beim Ausführungsbeispiel an einem axialen Ende des ersten Reaktionsbehälters 22a wird über die Gaszufuhreinrichtung 26 Luft L in die Oxidationszone ZO eingeleitet. Die Oxidationszone ZO ist in dem axialen Endabschnitt des ersten Reaktionsbehälters 22a vorhanden, in dem der erste Verbindungskanal 45 zum Zuführen der Biomasse B und die Leitung 26a der Gaszufuhreinrichtung 26 zum Zuführen der Luft L einmünden.

Die Wärme des Brenners 16 erwärmt auch bei dieser Ausführungsform sowohl die Vergasungszone ZV, als auch die Oxidationszone ZO, so dass ein schneller Wiederanlauf aus einem Ruhezustand möglich ist.

Innerhalb der ersten Reaktionskammer 23a im ersten Reaktionsbehälter 22a ist eine erste Fördereinrichtung 47 vorhanden, die beispielsgemäß durch eine motorisch angetriebene Förderschnecke gebildet ist. Die erste Fördereinrichtung 47 dient dazu, den kohlenstoffhaltigen Reststoff RK gemeinsam mit dem Rohgas R von der Oxidationszone ZO in die sich in demselben ersten Reaktionsbehälter 22a anschließende Vergasungszone ZV zu transportieren. Außerdem wird die dort erzeugte Aktivkohle AK sowie das heiße Prozessgas PH aus der Vergasungszone ZV gefördert und gelangt an einem der Oxidationszone ZO entgegengesetzten axialen Ende des ersten Reaktionsbehälters 22a in einen zweiten Verbindungskanal 48.

Der zweite Verbindungskanal 48 mündet in einen zweiten Reaktionsbehälter 22b ein, in dem eine zweite Reaktionskammer 23b vorhanden ist. Zumindest ein Abschnitt dieser zweiten Reaktionskammer 23b wird durch die Kühleinrichtung 17 zur Bildung der Kühlzone ZK gekühlt. Die Kühleinrichtung 17 ist entsprechend dem Ausführungsbeispiel nach Fig. 2 ausgeführt, so dass auf die vorstehende Beschreibung verwiesen werden kann.

In dem zweiten Reaktionsbehälter 22b ist eine zweite Fördereinrichtung 49 vorhanden - beispielsgemäß in Form einer motorbetriebenen Förderschnecke - mittels der die Aktivkohle AK bzw. das heiße Prozessgas PH in bzw. durch die Kühlzone KZ gefördert wird. An dem in Förderrichtung der zweiten Fördereinrichtung 49 angeordneten Ende des zweiten Reaktionsbehälters 22b sind der Feststoffauslass 36 sowie der Produktgasauslass 35 angeordnet. Der Feststoffauslass 36 ist beispielsgemäß durch einen im Wesentlichen vertikal verlaufenden Kanal gebildet und führt über die Entnahmeeinrichtung 37 zum Zwischenspeicher 38 und dem Mahleinrichtung 19, analog zum Ausführungsbeispiel der Vorrichtung 11 gemäß Fig. 2. Auch kann die in der Mahleinrichtung 19 gemahlene Aktivkohle AK, also der Kohlestaub SK, über das Förderfluid F zu dem Brenner 16 transportiert werden. An den Produktgasauslass 35 kann wie beim vorhergehenden Ausführungsbeispiel eine Absaugeinrichtung angeschlossen sein.

Der Trocknungsbehälter 44, der erste Reaktionsbehälter 22a und der zweite Reaktionsbehälter 22b sind hier als zylindrische Behälter parallel zueinander und/oder im Wesentlichen horizontal angeordnet. Zur Unterstützung der Zufuhreinrichtung 25, der ersten Fördereinrichtung 47 bzw. der zweiten Fördereinrichtung 49 könnten die Behälter 44, 22a, 22b in die jeweilige Förder- bzw. Transportrichtung auch geneigt angeordnet sein. Die Heizeinrichtung 15 und/oder die Kühleinrichtung 17 sind analog zum vorhergehenden Beispiel ausgeführt, wobei lediglich kleinere Anpassungen aufgrund der im Wesentlichen horizontalen Anordnung erforderlich bzw. vorteilhaft sind. Die Temperatursensoren 28a, 28b sind in Fig. 3 nicht explizit veranschaulicht, sind jedoch analog zum Ausführungsbeispiel nach Fig. 2 ebenfalls vorhanden.

Der Verfahrensablauf ist sowohl bei der Vorrichtung 11 gemäß Fig. 2, als auch bei dem Ausführungsbeispiel der Vorrichtung 11 nach Fig. 3 identisch und entsprechen dem anhand Fig. 1 erläuterten dreistufigen Verfahren.

Die Erfindung betrifft ein Verfahren 10 zur Vergasung von Biomasse B sowie eine dazu eingerichtete Vorrichtung 11. Das Verfahren erfolgt in drei Verfahrensstufen 12, 13, 14. In einer ersten Verfahrensstufe 12 wird in einer Oxidationszone ZO ein biogener Reststoff (Biomasse) und ein sauerstoffhaltiges Gas, beispielsweise Luft L unterstöchiometrisch oxidiert und ein Rohgas R sowie ein koksartiger, kohlenstoffhaltiger Reststoff RK erzeugt. Das Rohgas R und der kohlenstoffhaltige Reststoff RK werden in einer zweiten Verfahrensstufe 13 in einer Vergasungszone ZV teilweise vergast. Die Vergasungszone ZV wird indirekt beheizt. Dabei entsteht Aktivkohle AK sowie ein heißes Prozessgas PH. Diese Stoffe werden in einer dritten Verfahrensstufe 14 in einer Kühlzone ZK bis auf höchstens 50°C abgekühlt. Dabei findet ein Adsorptionsprozess statt. Teer aus dem heißen Prozessgas PH lagert sich während der Abkühlung an der Aktivkohle AK an. Dadurch wird im Anschluss an die dritte Verfahrensstufe 14 ein Reingas PR erhalten, das im Wesentlichen teerfrei ist. Die angereicherte Aktivkohle AK kann zumindest teilweise zur Beheizung der Vergasungszone ZV verbrannt werden.

### Bezugszeichenliste:

- 10: Verfahren
- 11: Vorrichtung
- 12: erste Verfahrenststufe
- 13: zweite Verfahrenststufe
- 14: dritte Verfahrenststufe
- 15: Heizeinrichtung
- 16: Brenner
- 17: Kühleinrichtung
- 18: Staubabscheideeinheit
- 19: Mahleinrichtung
- 20: Trocknungseinrichtung
- 21: Vorwärmeinrichtung
- 22: Reaktionsbehälter
- 22a: erster Reaktionsbehälter
- 22b: zweiter Reaktionsbehälter
- 23: Reaktionskammer
- 23a: erste Reaktionskammer
- 23b: zweite Reaktionskammer
- 24: Silo
- 25: Zufuhreinrichtung
- 25a: erste Stufe der Zufuhreinrichtung
- 25b: zweite Stufe der Zufuhreinrichtung
- 26: Gaszufuhreinrichtung
- 26a: Leitung
- 27: Isolation
- 28a: erster Temperatursensor
- 28b: zweiter Temperatursensor
- 29: Isolationsmantel
- 30: Heizkammer
- 31: Austrittskanal
- 32: Ascheabscheider
- 33: Kühlmantel
- 34: Kühlraum
- 35: Produktgasauslass
- 36: Feststoffauslass
- 37: Entnahmeeinrichtung
- 38: Zwischenspeicher

- 43: Trocknungskammer
- 44: Trocknungsbehälter
- 45: erster Verbindungskanal
- 46: Ringkammer
- 47: erste Fördereinrichtung
- 48: zweiter Verbindungskanal
- 49: zweite Fördereinrichtung

- A: Asche
- AK: Aktivkohle
- B: Biomasse
- C: Kühlmittel
- F: Förderfluid G Abgas
- L: Luft
- MAK: Teilmenge der Aktivkohle
- PA: abgekühltes Prozessgas
- PH: heißes Prozessgas
- PR: Reingas
- R: Rohgas
- RK: kohlenstoffhaltiger Reststoff
- TO: Temperatur in der Oxidationszone
- TV: Temperatur in der Vergasungszone
- ZK: Kühlzone
- ZO: Oxidationszone
- ZV: Vergasungszone

## Patentansprüche

1. Verfahren zum Vergasen von Biomasse (B),
wobei die Biomasse (B) in einer ersten Verfahrensstufe (12) in einer Oxidationszone (ZO) durch Zufuhr von einem sauerstoffhaltigem Gas (L) unterstöchiometrisch oxidiert wird, wodurch ein Rohgas (R) und ein kohlenstoffhaltiger Reststoff (RK) entstehen,
wobei der kohlenstoffhaltige Reststoff (RK) mit Gasbestandteilen des Rohgases (R) in einer zweiten Verfahrensstufe (13) in einer Vergasungszone (ZV) teilweise vergast wird, wodurch Aktivkohle (AK) und ein heißes Produktgas (PH) entstehen,
**dadurch gekennzeichnet, dass** die Aktivkohle (AK) und das heiße Produktgas (PH) in einer dritten Verfahrensstufe (14) in einer Kühlzone (ZK) abgekühlt werden, so dass ein Adsorptionsprozess stattfindet, bei dem die Aktivkohle (AK) durch Teer aus dem heißen Produktgas (PH) angereichert wird.

2. Verfahren nach Anspruch 1,
**dadurch gekennzeichnet, dass** eine Temperatur (TO) in der Oxidationszone (ZO) durch die Menge des zugeführten sauerstoffhaltigen Gases (L) eingestellt wird.

3. Verfahren nach Anspruch 1 oder 2,
**dadurch gekennzeichnet, dass** eine Temperatur (TO) in der Oxidationszone (ZO) kleiner ist als der Ascheschmelzpunkt oder der Ascheerweichungspunkt der Asche des kohlenstoffhaltigen Reststoffs (RK).

4. Verfahren nach einem der vorhergehenden Ansprüche,
**dadurch gekennzeichnet, dass** das Rohgas (R) und der kohlenstoffhaltige Reststoff (RK) in der Vergasungszone (ZV) durch indirektes Heizen erhitzt werden und/oder dass die Aktivkohle (AK) und das heiße Produktgas (PH) in der Kühlzone (ZK) durch indirektes Kühlen abgekühlt werden.

5. Verfahren nach einem der vorhergehenden Ansprüche,
**dadurch gekennzeichnet, dass** eine Temperatur (TV) in der Vergasungszone (ZV) mindestens 800°C und höchstens 1000°C beträgt.

6. Verfahren nach einem der vorhergehenden Ansprüche,
**dadurch gekennzeichnet, dass** die Aktivkohle (AK) und das heiße Produktgas (PH) in der Kühlzone (ZK) auf eine Temperatur von höchstens 50°C abgekühlt werden.

7. Verfahren nach einem der vorhergehenden Ansprüche,
**dadurch gekennzeichnet, dass** die Oxidationszone (ZO) und die Vergasungszone (ZV) in einer gemeinsamen Reaktionskammer (23) vorhanden sind.

8. Verfahren nach einem der vorhergehenden Ansprüche,
**dadurch gekennzeichnet, dass** die Vergasungszone (ZV) durch die Wärme eines Brenners (16) beheizt wird, wobei die Aktivkohle (AK) nach der Kühlzone (ZK) dem Brenner (16) zur Verbrennung zugeführt wird.

9. Verfahren nach Anspruch 8,
**dadurch gekennzeichnet, dass** ein bei der Verbrennung im Brenner entstehendes Abgas (G) zur Vorwärmung des sauerstoffhaltigen Gases (L) und/oder zur Trocknung der Biomasse (B) verwendet wird.

10. Verfahren nach einem der vorhergehenden Ansprüche,
**dadurch gekennzeichnet, dass** die Aktivkohle (AK) nach der Kühlzone (ZK) gemahlen oder feingemahlen wird.

11. Verfahren nach einem der vorhergehenden Ansprüche,
**dadurch gekennzeichnet, dass** eine Teilmenge (MAK) der Aktivkohle (AK) nach der Vergasungszone (ZV) und vor dem Zuführen zu der Kühlzone (ZK) entnommen und zur Feinreinigung des in der Kühlzone (ZK) abgekühlten Produktgases (PA) verwendet wird.

12. Verfahren nach einem der vorhergehenden Ansprüche,
**dadurch gekennzeichnet, dass** die Vergasung unter einem gegenüber dem Umgebungsdruck erhöhten Druck ausgeführt wird.

13. Vorrichtung zum Vergasen von Biomasse (B),
mit wenigstens einer Reaktionskammer (23), die dazu eingerichtet ist, eine Oxidationszone (ZO) und Vergasungszone (ZV) zu bilden, derart, dass die Oxidationszone (ZO) und die Vergasungszone (ZV) in einer gemeinsamen Reaktionskammer (23) oder in jeweils einer Reaktionskammer vorhanden sind,
mit einer Zufuhreinrichtung (25), die dazu eingerichtet ist, die Biomasse (B) der Oxidationszone (ZO) zuzuführen,
mit einer Gaszufuhreinrichtung, die dazu eingerichtet ist, der Oxidationszone (ZO) ein sauerstoffhaltiges Gas (L) in einer Menge zuzuführen, so dass die in der Oxidationszone (ZO) vorhandene Biomasse (B) unterstöchiometrisch oxidiert, wodurch ein Rohgas (R) und ein kohlenstoffhaltiger Reststoff (RK) entstehen,
mit einem Fördermittel, das dazu eingerichtet ist, das Rohgas (R) und den kohlenstoffhaltiger Reststoff (RK) mittels einer Fördereinrichtung und/oder mittels der herrschenden Gewichtskraft aus der Oxidationszone (ZO) in die Vergasungszone (ZV) zu fördern,
mit einer Heizeinrichtung (15), die dazu eingerichtet ist die Temperatur in der Vergasungszone (ZV) derart einzustellen, dass der kohlenstoffhaltiger Reststoff (RK) mit Gasbestandteilen des Rohgases (R) teilweise vergast wird, wodurch Aktivkohle (AK) und ein heißes Produktgas (PH) entstehen,
mit einem Fördermittel, das dazu eingerichtet ist, die Aktivkohle (AK) und das heiße Produktgas (PH) mittels einer Fördereinrichtung und/oder mittels der herrschenden Gewichtskraft aus der Vergasungszone (ZV) in eine Kühlzone (ZK) zu fördern,
und mit einer Kühleinrichtung (17) für das heiße Produktgas (PH),
**dadurch gekennzeichnet, dass** die Kühleinrichtung (17) dazu eingerichtet ist, die Aktivkohle (AK) und das heiße Produktgas (PH) in der Kühlzone (ZK) derart abzukühlen, dass ein Adsorptionsprozess stattfindet, bei dem die Aktivkohle (AK) durch Teer aus dem heißen Produktgas (PH) angereichert wird.

14. Vorrichtung nach Anspruch 13,
**dadurch gekennzeichnet, dass** die Oxidationszone (ZO) und die Vergasungszone (ZV) in einer vertikal oder horizontal ausgerichteten gemeinsamen Reaktionskammer (23) angeordnet sind.

15. Vorrichtung nach Anspruch 13 oder 14,
**dadurch gekennzeichnet, dass** die Vergasungszone (ZV) und die Kühlzone (ZK) in separaten Reaktionskammern (23a, 23b) angeordnet sind.

## Claims

1. Method for gasification of biomass (B),
wherein in a first method step (12), the biomass (B) is oxidised substoichiometrically in an oxidation zone (ZO) by the supply of an oxygen-containing gas (L), whereby a raw gas (R) and a carbon-containing residue (RK) are produced,
wherein in a second method step (13), the carbon-containing residue (RK) is partially gasified with gas constituents of the raw gas (R) in a gasification zone (ZV), whereby activated carbon (AK) and a hot product gas (PH) are produced,
**characterised in that** in a third method step (14), the activated carbon (AK) and the hot product gas (PH) are cooled in a cooling zone (ZK) so that an adsorption process takes place in which the activated carbon (AK) is enriched with tar from the hot product gas (PH).

2. Method according to claim 1, **characterised in that** a temperature (TO) in the oxidation zone (ZO) is set by the quantity of supplied oxygen-containing gas (L).

3. Method according to claim 1 or 2, **characterised in that** a temperature (TO) in the oxidation zone (ZO) is lower than the ash melting point or ash softening point of the ash of the carbon-containing residue (RK).

4. Method according to any of the preceding claims, **characterised in that** the raw gas (R) and the carbon-containing residue (RK) are heated in the gasification zone (ZV) by indirect heating, and/or that the activated carbon (AK) and the hot product gas (PH) are cooled in the cooling zone (ZK) by indirect cooling.

5. Method according to any of the preceding claims, **characterised in that** a temperature (TV) in the gasification zone (ZV) amounts to at least 800°C and at most 1000°C.

6. Method according to any of the preceding claims, **characterised in that** the activated carbon (AK) and the hot product gas (PH) are cooled in the cooling zone (ZK) to a temperature of maximum 50°C.

7. Method according to any of the preceding claims, **characterised in that** the oxidation zone (ZO) and the gasification zone (ZV) are present in a common reaction chamber (23).

8. Method according to any of the preceding claims, **characterised in that** the gasification zone (ZV) is heated by the heat of the burner (16), wherein the activated carbon (AK) is supplied to the burner (16) for combustion after the cooling zone (ZK).

9. Method according to claim 8, **characterised in that** a waste gas (G) occurring on combustion in the burner is used to preheat the oxygen-containing gas (L) and/or to dry the biomass (B).

10. Method according to any of the preceding claims, **characterised in that** the activated carbon (AK) is crushed or comminuted after the cooling zone (ZK).

11. Method according to any of the preceding claims, **characterised in that** a partial quantity (MAK) of the activated carbon (AK) is extracted after the gasification zone (ZV) and before the supply to the cooling zone (ZK), and used for fine cleaning of the product gas (PA) cooled in the cooling zone (ZK).

12. Method according to any of the preceding claims, **characterised in that** the gasification is carried out at a pressure higher than ambient pressure.

13. Device for gasification of biomass (B),
with at least one reaction chamber (23) which is configured to form an oxidation zone (ZO) and a gasification zone (ZV) such that the oxidation zone (ZO) and the gasification zone (ZV) are present in a common reaction chamber (23) or in separate reaction chambers,
with a supply device (25) which is configured to supply the biomass (B) to the oxidation zone (ZO),
with a gas supply device which is configured to supply an oxygen-containing gas (L) to the oxidation zone (ZO) in a quantity such that the biomass (B) present in the oxidation zone (ZO) oxidises substoichiometrically, whereby a raw gas (R) and a carbon-containing residue (RK) are produced,
with a conveying means which is configured to convey the raw gas (R) and the carbon-containing residue (RK) by means of a conveying device and/or by means of the prevailing weight force from the oxidation zone (ZO) to the gasification zone (ZV),
with a heating device (15) which is configured to set the temperature in the gasification zone (ZV) such that the carbon-containing residue (RK) is partially gasified with gas constituents from the raw gas (R), whereby activated carbon (AK) and a hot product gas (PH) are produced,
with a conveying means which is configured to convey the activated carbon (AK) and the hot product gas (PH) by means of a conveying device and/or by means of the prevailing weight force from the gasification zone (ZV) to a cooling zone (ZK), and with a cooling device (17) for the hot product gas (PH),
**characterised in that** the cooling device (17) is configured to cool the activated carbon (AK) and the hot product gas (PH) in the cooling zone (ZK) such that an adsorption process takes place in which the activated carbon (AK) is enriched with tar from the hot product gas (PH).

14. Device according to claim 13, **characterised in that** the oxidation zone (ZO) and the gasification zone (ZV) are arranged in a common reaction chamber (23) which is oriented vertically or horizontally.

15. Device according to claim 13 or 14, **characterised in that** the gasification zone (ZV) and the cooling zone (ZK) are arranged in separate reaction chambers (23a, 23b).

## Revendications

1. Procédé de gazéification de biomasse (B), dans lequel :
- dans une première étape (12) de procédé, la biomasse (B) est oxydée dans une zone d'oxydation (ZO), dans des conditions infra-stoechiométriques, par un gaz (L) contenant de l'oxygène qu'on y envoie, grâce à quoi il se forme un gaz brut (R) et un résidu (RK) contenant du carbone,
- et dans une deuxième étape (13) de procédé, le résidu (RK) contenant du carbone est partiellement gazéifié dans une zone de gazéification (ZV), avec des constituants gazeux du gaz brut (R), grâce à quoi il se forme du charbon actif (AK) et un produit gazeux chaud (PH),
**caractérisé en ce que**, dans une troisième étape (14) de procédé, le charbon actif (AK) et le produit gazeux chaud (PH) sont refroidis dans une zone de réfrigération (ZK), de telle manière qu'a lieu un processus d'adsorption par lequel le charbon actif (AK) est enrichi de goudron provenant du produit gazeux chaud (PH).

2. Procédé conforme à la revendication 1, **caractérisé en ce que** l'on ajuste la température (TO) régnant dans la zone d'oxydation (ZO) par le biais de la quantité de gaz (L) contenant de l'oxygène qui y est amenée.

3. Procédé conforme à la revendication 1 ou 2, **caractérisé en ce que** la température (TO) régnant dans la zone d'oxydation (ZO) est inférieure au point de fusion ou au point de ramollissement des cendres du résidu (RK) contenant du carbone.

4. Procédé conforme à l'une des revendications précédentes, **caractérisé en ce que** le gaz brut (R) et le résidu (RK) contenant du carbone sont chauffés par chauffage indirect dans la zone de gazéification (ZV) et/ou **en ce que** le charbon actif (AK) et le produit gazeux chaud (PH) sont refroidis par réfrigération indirecte dans la zone de réfrigération (ZK).

5. Procédé conforme à l'une des revendications précédentes, **caractérisé en ce que** la température (TV) régnant dans la zone de gazéification (ZV) vaut au moins 800 °C et au plus 1000 °C.

6. Procédé conforme à l'une des revendications précédentes, **caractérisé en ce que** le charbon actif (AK) et le produit gazeux chaud (PH) sont refroidis, dans la zone de réfrigération (ZK), jusqu'à une température d'au plus 50 °C.

7. Procédé conforme à l'une des revendications précédentes, **caractérisé en ce que** la zone d'oxydation (ZO) et la zone de gazéification (ZV) se trouvent dans une chambre de réaction commune (23).

8. Procédé conforme à l'une des revendications précédentes, **caractérisé en ce que** la zone de gazéification (ZV) est chauffée par la chaleur produite par un brûleur (16), auquel brûleur (16) le charbon actif (AK), après la zone de réfrigération (ZK), est amené pour combustion.

9. Procédé conforme à la revendication 8, **caractérisé en ce qu'**un gaz résiduaire (G) formé lors de la combustion dans le brûleur est utilisé pour le préchauffage du gaz (L) contenant de l'oxygène et/ou pour le séchage de la biomasse (B).

10. Procédé conforme à l'une des revendications précédentes, **caractérisé en ce que** le charbon actif (AK), après la zone de réfrigération (ZK), est broyé ou finement moulu.

11. Procédé conforme à l'une des revendications précédentes, **caractérisé en ce qu'**une partie (MAK) du charbon actif (AK), après la zone de gazéification (ZV) et avant l'amenée vers la zone de réfrigération (ZK), est prélevée et utilisée pour la purification poussée du produit gazeux (PA) refroidi dans la zone de réfrigération (ZK).

12. Procédé conforme à l'une des revendications précédentes, **caractérisé en ce que** la gazéification est réalisée sous pression élevée par rapport à la pression ambiante.

13. Installation de gazéification de biomasse (B), comportant :
- au moins une chambre de réaction (23), configurée(s) pour former une zone d'oxydation (ZO) et une zone de gazéification (ZV), de telle sorte que la zone d'oxydation (ZO) et la zone de gazéification (ZV) se trouvent dans une chambre de réaction commune (23) ou se trouvent chacune dans une chambre de réaction,
- un dispositif d'acheminement (25), configuré pour amener la biomasse (B) jusqu'à la zone d'oxydation (ZO),
- un dispositif d'introduction de gaz, configuré pour introduire dans la zone d'oxydation (ZO) un gaz (L) contenant de l'oxygène, en une quantité telle que la biomasse (B) présente dans la zone d'oxydation (ZO) est oxydée dans des conditions infra-stoechiométriques, grâce à quoi il se forme un gaz brut (R) et un résidu (RK) contenant du carbone,
- un moyen de transport, configuré pour transporter, de la zone d'oxydation (ZO) dans la zone de gazéification (ZV), le gaz brut (R) et le résidu (RK) contenant du carbone, au moyen d'un dispositif de transport et/ou sous l'action de la force de pesanteur,
- un dispositif de chauffage (15), configuré pour régler la température régnant dans la zone de gazéification (ZV) de telle sorte que le résidu (RK) contenant du carbone est partiellement gazéifié avec des constituants gazeux du gaz brut (R), grâce à quoi il se forme du charbon actif (AK) et un produit gazeux chaud (PH),
- un moyen de transport, configuré pour transporter, de la zone de gazéification (ZV) dans une zone de réfrigération (ZK), le charbon actif (AK) et le produit gazeux chaud (PH), au moyen d'un dispositif de transport et/ou sous l'action de la force de pesanteur,
- et un dispositif de réfrigération (17) du produit gazeux chaud (PH), **caractérisé en ce que** le dispositif de réfrigération (17) est configuré pour que le charbon actif (AK) et le produit gazeux chaud (PH) soient refroidis, dans la zone de réfrigération (ZK), de telle manière qu'ait lieu un processus d'adsorption par lequel le charbon actif (AK) est enrichi de goudron provenant du produit gazeux chaud (PH).

14. Installation conforme à la revendication 13, **caractérisée en ce que** la zone d'oxydation (ZO) et la zone de gazéification (ZV) sont aménagées dans une chambre de réaction commune (23), disposée verticalement ou horizontalement.

15. Installation conforme à la revendication 13 ou 14, **caractérisée en ce que** la zone de gazéification (ZV) et la zone de réfrigération (ZK) sont aménagées dans des chambres de réaction séparées (23a, 23b).
